# EUROPÄISCHE PATENTSCHRIFT

(11) **EP 2 477 852 B1**
(45) Veröffentlichungstag und Bekanntmachung des Hinweises auf die Patenterteilung: **09.09.2015**
(21) Anmeldenummer: 10734137.2
(22) Anmeldetag: 21.07.2010
(51) Int. Cl.: B60S 1/16, B60S 1/24, F16D 1/09, F16C 3/10, B21K 25/00

(54) **SCHEIBENWISCHVORRICHTUNG**
WINDSHIELD WIPER DEVICE
DISPOSITIF D'ESSUIE-GLACE

(30) Priorität: 14.09.2009 DE 102009029429
(43) Veröffentlichungstag der Anmeldung: 25.07.2012
(73) Patentinhaber: Robert Bosch GmbH, 70442 Stuttgart (DE)
(72) Erfinder: TRENKLE, Lothar, 77833 Ottersweier (DE)
(86) Internationale Anmeldenummer: PCT/EP2010/060532
(87) Internationale Veröffentlichungsnummer: WO 2011/029652

(56) Entgegenhaltungen:
- EP-A1- 0 316 832
- EP-A2- 1 944 211
- DE-A1- 3 643 474
- DE-A1- 4 307 994
- DE-A1-102008 055 176
- FR-A1- 2 848 953
- US-A- 4 118 134

## Beschreibung

### Stand der Technik

Die Erfindung betrifft eine Scheibenwischvorrichtung insbesondere für ein Kraftfahrzeug mit einem Wischermotor, der eine Abtriebswelle antreibt, die mit einer einen Wischhebel betätigenden Kurbelplatte zur Bildung einer drehfesten Verbindung verpresst, insbesondere vercrimpt ist.

Scheibenwischvorrichtungen der oben genannten Art sind beispielsweise aus der DE 3 643 474 bekannt. Zur Montage der Kurbelplatte ist in einem Getriebegehäuse der Scheibenwischvorrichtung eine Öffnung ausgebildet, durch die ein mit der Kurbelplatte zu bestückender freier Endabschnitt der Abtriebswelle herausrägt. Zur Bildung einer drehfesten Verbindung zwischen Abtriebswelle und Kurbelplatte ist der Endabschnitt in einem Überdeckungsbereich mit der Kurbelplatte konisch ausgebildet und weist eine Rändelung auf. Zur axialen Fixierung der Kurbelplatte auf dem Endabschnitt der Abtriebswelle ist an letzterem ferner ein Gewinde ausgebildet, auf welches eine Schraubenmutter zur Verspannung der Kurbelplatte mit dem konischen Bereich der Abtriebswelle aufgeschraubt werden kann.

Die bekannte Konstruktion bringt den Nachteil mit sich, dass die Lage der Kurbelplatte nach der Montage im Bereich der Rändelung stark schwankt. Dies wird vor allem durch die Winkel- und Durchmessertoleranzen der Rändelung an der Abtriebswelle und der Abmessungen der Kurbelplatte bedingt. Vereinzelt kann es bei einer solchen Art der Verbindung auch vorkommen, dass sich die Schraubenmutter im Betrieb der Scheibenwischvorrichtung z.B. aufgrund von Schwingungen von dem Endabschnitt löst, wodurch sich auch die Kurbelplatte lockern und im schlechtesten Falle von der Abtriebswelle abfallen kann. Ferner ist aufgrund der Notwendigkeit des Vorsehens der Schraubenmutter die Bauhöhe der Scheibenwischvorrichtung sehr groß und benötigt einen entsprechend großen Einbauraum im Fahrzeug. Auch die Herstellung des Rändelkegels ist sehr kostspielig.

EP-A- 1 944 211 offenbart der Oberbegriff des Anspruchs 1.

Es ist daher Aufgabe der vorliegenden Erfindung, eine Scheibenwischvorrichtung bereitzustellen, die auf einfache und kostengünstige Weise herstellbar ist und dabei eine verbesserte Montagesicherheit mit sich bringt.

### Offenbarung der Erfindung

Diese Aufgabe wird erfindungsgemäß durch die Merkmale des Anspruchs 1.

Mit anderen Worten wird durch Vorsehen einer erfindungsgemäßen Crimptasche erreicht, dass nach lagerichtiger Montage der Kurbelplatte auf die Abtriebswelle bei einem anschließenden Verpressen ein Fließen des Materials der Kurbelplatte in den durch die Crimptasche gebildeten Hohlraum zu einer verbesserten Verkeilung zwischen Kurbelplatte und Abtriebswelle führt. Durch diese Verkeilung und die damit einhergehenden hohen Reibwerte wird eine verbesserte Verdrehsicherung zwischen der Kurbelwelle und der Abtriebswelle erreicht, so dass zwischen den Verbindungspartnern große Drehmomente übertragen werden können. Ferner wird durch die Crimptaschen erreicht, dass eine im Vergleich zu einer Verpressung ohne Crimptasche wesentlich geringeren Presskraft notwendig ist, um eine verdrehsichere Befestigung zu erreichen.

### Vorteile der Erfindung

In. vorliegenden Erfindung wird vorgeschlagen, die Crimptaschen durch ein an dem Endabschnitt der Abtriebswelle zumindest im Überdeckungsbereich mit der Kurbelplatte vorgesehenes Außengewinde zu bilden, wobei das Außengewinde mit einem an der Kurbelplatte ausgebildeten Innengewinde verschraubbar ist. Diese Ausführungsform hat zum Einen den Vorteil, dass die Kurbelplatte durch einfaches Aufschrauben auf die Abtriebswelle lagerichtig montiert werden kann. Zum anderen kann beim anschließenden Verpressen der Kurbelplatte und der Abtriebswelle das Material der Kurbelwelle in die kleinen Gewindezwischenräume fließen und sorgt für eine Verkeilung in dem Gewinde und dadurch zu einer extrem hohen Reibung innerhalb des Gewindes, was dazu führt, dass zwischen Kurbelplatte und Abtriebswelle große Drehmomente übertragen werden können. Das Innen- und/oder das Außengewinde können als Normal- oder Feingewinde ausgebildet sein. Natürlich ist es auch möglich, den Endabschnitt zusätzlich zu dem Außengewinde mit Längs- oder Quernuten zu kombinieren.

Eine Kegelsenkung in der Kurbelplatte und ein Rändelkegel an der Abtriebswelle können somit vollständig entfallen. Durch Substitution der Kegelsenkung in der Kurbelplatte durch ein Gewinde können die Herstellungskosten gesenkt werden. Des weiteren kann auch ein Sicherungselement wie beispielsweise eine Sechskantmutter vollständig entfallen, was die gesamt Bauhöhe und damit den benötigten Einbauraum der Scheibenwischvorrichtung im Fahrzeug deutlich reduziert.

Eine besonders kostengünstige Ausführungsart der erfindungsgemäßen Scheibenwischvorrichtung wird bereitgestellt, indem mindestens eine der Crimptaschen durch eine Vertiefung insbesondere in der Form einer Längs- oder Quernut gebildet ist. Die Längs- oder Quernuten können dabei möglichst homogen über den Umfang des Endabschnittes verteilt sein. Eine verbesserte formschlüssige Verbindung zwischen Kurbelplatte und Abtriebswelle ergibt sich, wenn mindestens eine der Vertiefungen ferner mit einer Hinterschneidung versehen ist.

Zur genauen Positionierung der Kurbelplatte an der Abtriebswelle und zur besseren Abstützung und Entlastung des Gewindes bei auf die Kurbelplatte gegebenenfalls wirkenden Querkräften kann in einem weiteren Ausführungsbeispiel ein Anschlag, insbesondere eine Wellenschulter an der Abtriebswelle ausgebildet sein.

Um ein möglichst reproduzierbares Verpressen von Abtriebswelle und Kurbelplatte auch bei Serienfertigungen zu ermöglichen, kann mindestens eine Positionierhilfe für ein zum Verpressen notwendiges Werkzeug, insbesondere ein Crimpwerkzeug an der Kurbelplatte und/oder der Abtriebswelle vorgesehen sein.

Eine weitere Möglichkeit der Erhöhung der Reproduzierbarkeit kann dadurch gewährleistet werden, dass mindestens eine der Stirnseiten der Kurbelplatte im Bereich der Crimpung eine Prägung aufweist. Dabei kann die Länge und Form der Prägung variiert werden. Beispielsweise kann sich die Prägung über die gesamte Bauhöhe der Kurbelplatte erstrecken oder aber auch entlang der Stirnseite vorgesehen sein.

Ferner kann die Prägung und insbesondere der Grund der Prägung zur Erzielung einer möglichst homogenen Druckverteilung in den Crimptaschen beim Verpressen der Bauteile an die Bauteilgeometrie angepasst ausgebildet sein. Je nach Ausbildung der Crimptaschen kann es sinnvoll sein, den Prägungsgrund konvex öder konkav oder auch mit einer anderen an die Geometrie der Crimptaschen angepassten Grundfläche auszubilden. Ist an der Abtriebswelle ein Außengewinde vorgesehen, so bietet sich beispielsweise eine konkave Ausbildung des Prägungsgrundes der Prägung zur Erzielung einer homogenen Druckverteilung während des Verpressens an.

In einem weiteren Ausführungsbeispiel der vorliegenden Erfindung weist die Abtriebswelle einen Positionierungs- und Nullstellungskennzeichenmittel insbesondere in Form eines Torx oder Innen-Sechskants auf, der beispielsweise in die Stirnseite des Endabschnitts der Abtriebswelle eingeprägt sein kann. Diese Sechskant- bzw. Torxschnittstelle kann zur Sicherung der Kurbelposition während der Montage oder aber als Wischwinkelkontrolle am Bandende der Scheibenwischvorrichtungsfertigung dienen. Darüber hinaus kann hierdurch eine "Nullstellenposition" definiert werden und die Leistungsüberprüfung des Motors vereinfacht werden.

In einem weiteren Ausführungsbeispiel kann die Abtriebswelle zur axialen Fixierung der Kurbelplatte ferner mit einem durch Rollieren gebildeten Vorsprung versehen sein. Hierzu kann der Endabschnitt der Abtriebswelle von der Kurbelplatte derart vorstehen, dass der Vorsprung nach Montage der Kurbelplatte beispielsweise durch axiales Rollieren herstellbar ist. Natürlich ist ein Herstellen des Vorsprung durch Löten oder Schweißen ebenfalls denkbar.

Weitere vorteilhafte Ausgestaltungen der vorliegenden Erfindung ergeben sich aus den Unteransprüchen und aus Kombinationen derselben. Die Erfindung wird nachfolgend anhand von Zeichnungen näher erläutert.

### Kurze Beschreibung der Zeichnungen

Es zeigen:
- Figur 1: eine perspektivische Darstellung einer erfindungsgemäßen Scheibenwischvorrichtung mit einer auf die Abtriebswelle geschraubten und verpressten Kurbelplatte;
- Figur 2: eine Teildarstellung einer erfindungsgemäßen Scheibenwischvorrichtung gemäß Figur 1 im Längsschnitt;
- Figur 3: eine schematische Teildarstellung einer erfindungsgemäßen Scheibenwischvorrichtung mit Crimptaschen in Form von Längsnuten;
- Figur 4: eine schematische Teildarstellung einer erfindungsgemäßen Scheibenwischvorrichtung mit Crimptaschen in Form von Quernuten;
- Figur 5: eine Teildarstellung einer Draufsicht einer erfindungsgemäßen Scheibenwischvorrichtung mit Torx oder Innen-Sechskant.

### Ausführungsformen der Erfindung

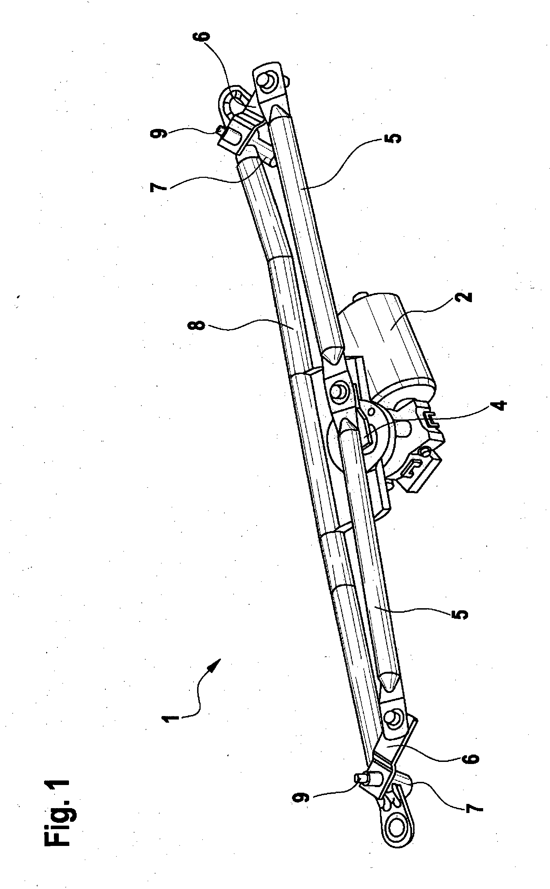

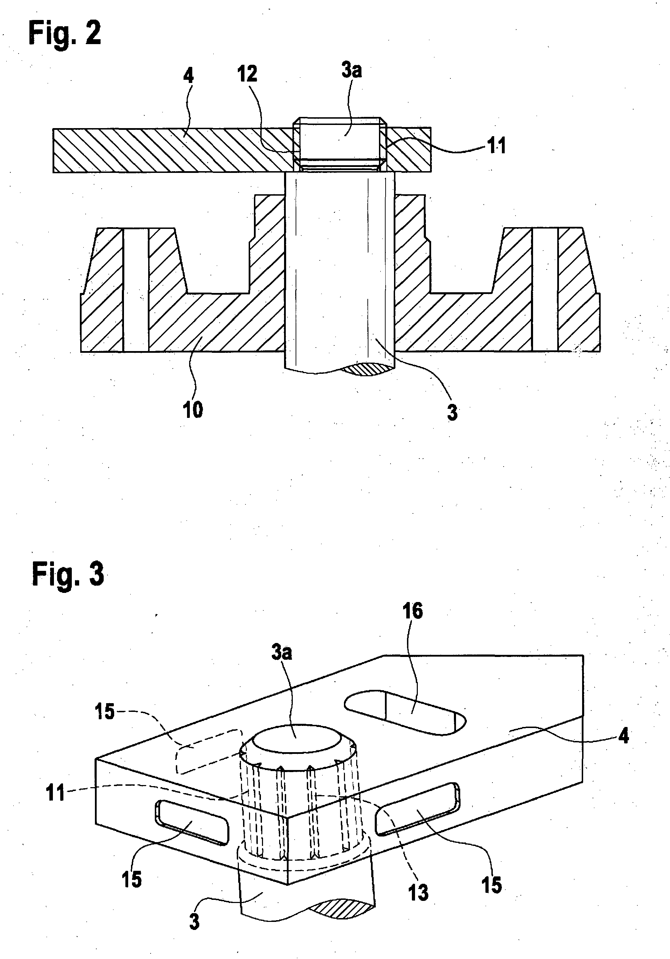

Figur 1 zeigte eine perspektivische Darstellung einer erfindungsgemäßen Scheibenwischvorrichtung 1. Die Scheibenwischvorrichtung 1 umfasst im Wesentlichen ein Antriebsmittel 2, das eine Abtriebswelle 3 (siehe auch Figur 2) antreibt. Die Abtriebswelle 3 ist drehfest mit einer Kurbelplatte 4 verbunden, die das von ihr aufgenommene Drehmoment an zwei Schubstangen 5 weiterleitet. Die Schubstangen 5 sind an ihrem einen Ende mit dem freien Ende der Kurbel 4 drehbeweglich verbunden, an ihrem anderen Ende über eine Abtriebskurbel 6 jeweils mit einem Wischerlager 7.

Die Wischerlager 7 sind wiederum über eine Rohrplatine 8 miteinander verbunden. Die Wischerlager 7 weisen jeweils eine Wischerwelle 9 auf, welche hier nicht gezeigte Wischerarme mit deren Wischblättern tragen. Die Abtriebskurbeln 6 sind mit den Wischerlagern 7 bzw. den Wischerwellen 9 drehfest verbunden, so dass eine Schubbewegung der Schubstangen 5 über die Abtriebskurbeln 6 an den Wischerwellen 9 in eine pendelnde Drehbewegung überführt wird.

Die Figur 2 zeigt eine schematische Teildarstellung einer erfindungsgemäßen Scheibenwichvorrichtung 1 gemäß Figur 1 im Längsschnitt. Die Abtriebswelle 3 ragt mit einem mit der Kurbelplatte 4 zu bestückenden freien Endabschnitt 3a aus einen das Antriebsmittel 2 teilweise umgebenden Getriebegehäuse 10 heraus. An dem freien Endabschnitt 3a ist im Überdeckungsbereich mit der Kurbelplatte 4 ein Außengewinde 11 ausgebildet, welche mit einem an der Kurbelplatte 4 ausgebildeten Innengewinde 12 zusammenwirkt. Das Außengewinde 11 bildet in diesem Ausführungsbeispiel eine Crimptasche, in welche bei einem Verpressen oder Vercrimpen das Material der Kurbelplatte 4 in den durch das Außengewinde 11 gebildeten Hohlraum fließt führt. Dies führt zu einer verbesserten Verkeilung zwischen Kurbelplatte 4 und Abtriebswelle 3. Durch diese Verkeilung und die damit einhergehenden hohen Reibwerte wird eine verbesserte Verdrehsicherung zwischen der Kurbelplatte 4 und der Abtriebswelle 3 gebildet, so dass zwischen ihnen große Drehmomente übertragen werden können. Das Gewinde 11 ist als gehärtetes Außengewinde ausgebildet und erstreckt sich in etwa über den gesamten Endabschnitt 3a der Abtriebswelle 3. Dadurch kann die Kurbelplatte 4 auch bei einem Überdrehen drehfest auf die Abtriebswelle 3 aufgeschraubt werden und schließt an der Stirnseite der Abtriebswelle 3 mit dem Anschlag 3b der Abtriebswelle 3 bündig ab.

Das Gewinde 11 der Abtriebswelle 3 einerseits und die Wellenschulter 3b andererseits fixieren die Position an der Kurbelplatte 4 durch eine entsprechende Verspannung. Vorzugsweise entspricht die Länge des Gewindes 11 der Dicke der Kurbelplatte 4, so dass die beiden Bauteile bündig abschließen.

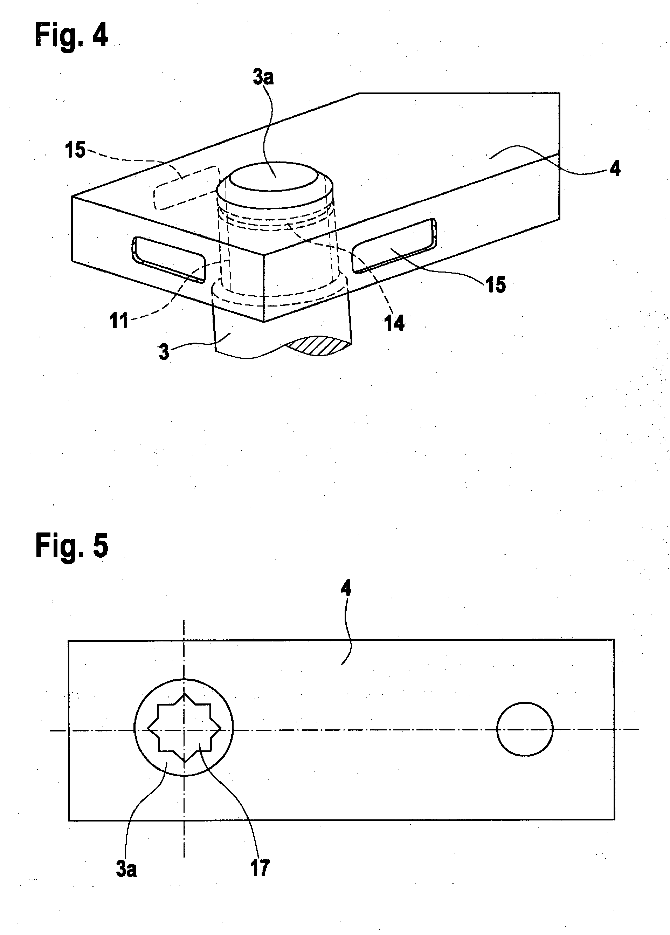

In einem alternativen Ausführungsbeispiel sind die Crimptaschen durch das Außengewinde 11 in Kombination mit in dem Endabschnitt 3a der Abtriebswelle 3 vorgesehenen Längsnuten 13 gebildet, wie auch näher schematisch in der Figur 3 gezeigt ist. Die Längsnuten 13 bzw. auch die Quernuten 14 gemäß Figur 4 schaffen hier einen Raum, in welchen der Werkstoff der Kurbelplatte 4 während des Crimp- bzw. Pressvorganges fließen kann. Die Längsnuten 13 sind hier mit einem Hinterschnitt ausgeführt, was dazu führt, dass sich der Werkstoff der Kurbelplatte 4 noch besser in den durch die Längsnut gebildeten Hohlraum verankern kann. Die Herstellung eines solchen Hinterschnittes kann beispielsweise durch Kaltfließpressen erfolgen.

Ferner sind an den Stirnseiten der Kurbelplatte 4 vier Prägungen 15 ausgebildet. Die Prägungen 15 in diesem Ausführungsbeispiel sind entlang der Seitenflächen der Kurbelplatte 4 ausgebildet und weisen einen ebenen Boden auf. In einem alternativen nicht dargestellten Beispiel sind die Böden der Prägung 15 konkav ausgeführt. Dies ist beispielsweise in Scheibenwischvorrichtungen zweckmäßig, bei denen die Kurbelplatte über ein Gewinde an dem Endabschnitt 3a der Abtriebswelle 3 befestigt ist, um eine gleichmäßigere Druckverteilung zu erhalten. Ferner ist in diesem Ausführungsbeispiel eine Positionierhilfe 16 vorgesehen, um das zum Verpressen notwendige Crimpwerkzeug möglichst genau und reproduzierbar an der Kurbelplatte 4 und/oder der Abtriebswelle 3 ansetzen zu können.

Figur 5 zeigt eine Teildarstellung einer Draufsicht einer erfindungsgemäßen Scheibenwischvorrichtung mit einem Torks oder Innensechskant 17. Der Torks oder der Innensechkant 17 sind in diesem Ausführungsbeispiel in die Kurbelplatte 4 eingeprägt und kann zur Positionssicherung bei der Montage der Kurbelplatte, zur Einstellung des Wischwinkels oder aber auch zur Kontrolle am Band bei der Endwischanlagenfertigung, zur Positionierung der Nullstellung des Motors vor der Motorkurbelmontage oder aber auch zur Leistungsprüfung bei der Bandendkontrolle der Motorenfertigung eingesetzt werden.

Zur Fertigung der erfindungsgemäßen Scheibenwischvorrichtung muss die Kurbelplatte 4 zunächst lagerichtig montiert werden. Dazu wird die Kurbelplatte 4 auf den Endabschnitt 3a der Abtriebswelle 3 aufgeschoben bzw. im Falle des in der Figur 1 näher beschriebenen Ausführungsbeispiels auf das Außengewinde 11 der Abtriebswelle 3 aufgeschraubt. Vor der Verschraubung der Kurbelplatte 4 mit dem Endabschnitt 3b der Abtriebswelle 3 ist Schraubenkleber als Schraubensicherungsmittel auf das Außengewinde 11 sowie auf das Innengewinde 12 aufgebracht worden. Nachdem die Kurbelplatte 4 die richtige Position eingenommen hat, wird sie mittels eines Crimpwerkzeuges (nicht dargestellt) von außen verpresst. Dadurch fließt Material der Kurbelplatte 4 in die in dem Endabschnitt 3a der Abtriebswelle 3 vorgesehenen Vertiefungen. Es entsteht eine Art Verankerung zwischen dem Endabschnitt 3a der Abtriebswelle 3 und der Kurbelplatte 4 und extrem hohe Reibkräft zwischen den beiden Fügepartner, so dass ein Verdrehen der beiden Teile relativ zu einander verhindert wird und entsprechend hohe Drehmomente zwischen ihnen übertragen werden können.

Soll eine axiale Sicherung der Kurbelplatte mittels eines Vorsprungs, insbesondere eines Wulstes erfolgen, so sollte der Endabschnitt 3a der Abtriebswelle 3 über die Kurbelplatte 4 um ein Maß herausragen, das beispielsweise durch anschließendes Rollieren des freien Endabschnittes 3a ein Wulst entstehen kann, der über die Kurbelplatte 4 hinausragt und so die Kurbelplatte 4 axial sichert. Alternativ kann der Endabschnitt 3a soweit verlängert werden und das Außengewinde 11 über sich den gesamten Endabschnitt 3a erstrecken. Dadurch wird es möglich, über das Außengewinde beispielsweise eine Mehrkantmutter gegen die Kurbelplatte 4 zu verdrehen.

## Patentansprüche

1. Scheibenwischvorrichtung (1) insbesondere für ein Kraftfahrzeug mit einem Wischermotor (2), der eine Abtriebswelle (3) antreibt, die mit einer einen Wischhebel betätigenden Kurbelplatte (4) zur Bildung einer drehfesten Verbindung verpresst, insbesondere vercrimpt ist, wobei in einem Endabschnitt (3a) der Abtriebswelle (3) mehrere Crimptaschen (11, 13, 14) ausgebildet sind, **dadurch gekennzeichnet, dass** die Crimptaschen (11, 13, 14) durch ein an dem Endabschnitt (3a) zumindest im Überdeckungsbereich mit der Kurbelplatte (4) vorgesehenes Außengewinde (11) gebildet sind, welches mit einem an der Kurbelplatte (4) ausgebildeten Innengewinde (12) verschraubbar ist.

2. Scheibenwischvorrichtung (1) nach Anspruch 1, **dadurch gekennzeichnet, dass** das Außengewinde (11, 12) als Normal- oder Feingewinde ausgebildet ist.

3. Scheibenwischvorrichtung (1) nach Anspruch 1 oder 2, **dadurch gekennzeichnet, dass** mindestens eine der Crimptaschen (11, 13, 14) durch eine Vertiefung insbesondere in der Form einer Längs- und/oder Quernut gebildet ist.

4. Scheibenwischvorrichtung (1) nach Anspruch 3, **dadurch gekennzeichnet, dass** mindestens eine Vertiefung mit einer Hinterschneidung versehen ist.

5. Scheibenwischvorrichtung (1) nach einem der vorhergehenden Ansprüche, **dadurch gekennzeichnet, dass** zur Positionierung und Sicherung der Kurbelplatte (4) an der Abtriebswelle (3) ein Anschlag (3b), insbesondere eine Wellenschulter an der Abtriebswelle (3) ausgebildet ist.

6. Scheibenwischvorrichtung (1) nach einem der vorhergehenden Ansprüche, **dadurch gekennzeichnet, dass** mindestens eine Positionierhilfe (16) für ein zum Verpressen notwendiges Werkzeug an der Kurbelplatte (4) und/oder der Abtriebswelle (3) vorgesehen ist.

7. Scheibenwischvorrichtüng (1) nach einem der vorhergehenden Ansprüche, **dadurch gekennzeichnet, dass** mindestens eine der Stirnseiten der Kurbelplatte (4) eine insbesondere konkave Prägung (15) aufweist.

8. Scheibenwischvorrichtung (1) nach einem der vorhergehenden Ansprüche, **dadurch gekennzeichnet, dass** die Abtriebswelle (3) einen Positionierungs- und Nullstellungskennzeichenmittel, insbesondere in Form eines Torx oder Innensechskants (17) aufweist.

9. Scheibenwischvorrichtung (1) nach einem der vorhergehenden Ansprüche, **dadurch gekennzeichnet, dass** die Abtriebswelle (3) zur axialen Fixierung der Kurbelplatte (4) mit einem insbesondere durch im Wesentlichen radiales Rollieren gebildeten Vorsprung versehen ist.

## Claims

1. Windscreen wiper device (1), in particular for a motor vehicle, with a wiper motor (2) which drives an output shaft (3) which is pressed, in particular crimped, with a crank plate (4) actuating a wiper lever, in order to form a connection thereto for rotation therewith, wherein a plurality of crimp pockets (11, 13, 14) are formed in an end section (3a) of the output shaft (3), **characterized in that** the crimp pockets (11, 13, 14) are formed by an external thread (11) which is provided on the end section (3a) at least in the region of overlap with the crank plate (4) and is screwable to an internal thread (12) formed on the crank plate (4).

2. Windscreen wiper device (1) according to Claim 1, **characterized in that** the external thread (11, 12) is designed as a normal thread or fine-pitch thread.

3. Windscreen wiper device (1) according to Claim 1 or 2, **characterized in that** at least one of the crimp pockets (11, 13, 14) is formed by a depression, in particular in the form of a longitudinal groove and/or transverse groove.

4. Windscreen wiper device (1) according to Claim 3, **characterized in that** at least one depression is provided with an undercut.

5. Windscreen wiper device (1) according to one of the preceding claims, **characterized in that** a stop (3b), in particular a shaft shoulder, is formed on the output shaft (3) for the positioning and securing of the crank plate (4) on the output shaft (3).

6. Windscreen wiper device (1) according to one of the preceding claims, **characterized in that** at least one positioning aid (16) for a tool necessary for the pressing is provided on the crank plate (4) and/or on the output shaft (3).

7. Windscreen wiper device (1) according to one of the preceding claims, **characterized in that** at least one of the end sides of the crank plate (4) has an in particular concave indentation (15).

8. Windscreen wiper device (1) according to one of the preceding claims, **characterized in that** the output shaft (3) has a positioning and zero position identification means, in particular in the form of a torx or hexagon socket (17).

9. Windscreen wiper device (1) according to one of the preceding claims, **characterized in that** the output shaft (3) is provided with a projection, formed in particular by substantially radial roller-burnishing, for the axial fixing of the crank plate (4).

## Revendications

1. Dispositif d'essuie-glace (1), en particulier pour un véhicule automobile, comprenant un moteur d'essuie-glace (2) qui entraîne un arbre de sortie (3) qui est pressé, en particulier serti, avec une plaque de manivelle (4) actionnant un levier d'essuie-glace pour former une liaison solidaire en rotation, plusieurs poches de sertissage (11, 13, 14) étant réalisées dans une portion d'extrémité (3a) de l'arbre de sortie (3), **caractérisé en ce que** les poches de sertissage (11, 13, 14) sont formées par un filetage extérieur (11) prévu sur la portion d'extrémité (3a) au moins dans la région de recouvrement de la plaque de manivelle (4), lequel filetage extérieur peut être vissé sur un filetage intérieur (12) réalisé sur la plaque de manivelle (4).

2. Dispositif d'essuie-glace (1) selon la revendication 1, **caractérisé en ce que** le filetage extérieur (11, 12) est réalisé sous forme de filetage normal ou fin.

3. Dispositif d'essuie-glace (1) selon la revendication 1 ou 2, **caractérisé en ce qu'**au moins l'une des poches de sertissage (11, 13, 14) est formée par un évidement en particulier sous la forme d'une rainure longitudinale et/ou transversale.

4. Dispositif d'essuie-glace (1) selon la revendication 3, **caractérisé en ce qu'**au moins un évidement est pourvu d'une contre-dépouille.

5. Dispositif d'essuie-glace (1) selon l'une quelconque des revendications précédentes, **caractérisé en ce qu'**en vue du positionnement et de la fixation de la plaque de manivelle (4) sur l'arbre de sortie (3), une butée (3b), en particulier un épaulement d'arbre, est réalisé(e) sur l'arbre de sortie (3).

6. Dispositif d'essuie-glace (1) selon l'une quelconque des revendications précédentes, **caractérisé en ce qu'**au moins un auxiliaire de positionnement (16) pour un outil nécessaire pour le pressage est prévu sur la plaque de manivelle (4) et/ou l'arbre de sortie (3).

7. Dispositif d'essuie-glace (1) selon l'une quelconque des revendications précédentes, **caractérisé en ce qu'**au moins l'un des côtés frontaux de la plaque de manivelle (4) présente une empreinte (15) en particulier concave.

8. Dispositif d'essuie-glace (1) selon l'une quelconque des revendications précédentes, **caractérisé en ce que** l'arbre de sortie (3) présente un moyen de positionnement et de repère de position zéro, en particulier sous la forme d'une empreinte Torx ou d'une empreinte à six pans creux (17).

9. Dispositif d'essuie-glace (1) selon l'une quelconque des revendications précédentes, **caractérisé en ce que** l'arbre de sortie (3) est pourvu d'une saillie formée en particulier par galetage essentiellement radial pour la fixation axiale de la plaque de manivelle (4).
